# EUROPÄISCHE PATENTSCHRIFT

(11) **EP 3 319 396 B1**
(45) Veröffentlichungstag und Bekanntmachung des Hinweises auf die Patenterteilung: **18.05.2022**
(21) Anmeldenummer: 17198198.8
(22) Anmeldetag: 25.10.2017
(51) Int. Cl.: H05B 1/02, F24H 9/20, G05D 23/19

(54) **VERFAHREN ZUM BETREIBEN EINER HEIZVORRICHTUNG**
METHOD FOR OPERATING A HEATING UNIT
PROCÉDÉ DE FONCTIONNEMENT D'UN DISPOSITIF DE CHAUFFAGE

(30) Priorität: 08.11.2016 DE 102016221894
(43) Veröffentlichungstag der Anmeldung: 09.05.2018
(73) Patentinhaber: Robert Bosch GmbH, 70442 Stuttgart (DE)
(72) Erfinder: van Dijk, Jeroen, 7418 BG Deventer (NL); Zeinaly, Yashar, 7418 BG Deventer (NL)

(56) Entgegenhaltungen:
- DE-A1- 3 718 653
- DE-A1- 4 331 917
- DE-A1- 19 613 021
- DE-A1- 19 649 157
- US-A- 4 268 784

## Beschreibung

Die Erfindung betrifft ein Verfahren zum Betreiben einer Heizvorrichtung. Die Erfindung betrifft ferner eine Heizvorrichtung.

### Stand der Technik

Bekannt sind Thermostat-Einrichtungen, die es einem Verbraucher ermöglichen, eine Zimmertemperatur eines oder mehrerer von einer Gas-Heizvorrichtung beheizten Zimmers einzustellen.

Bekannt sind ferner kostengünstige Gas-Heizvorrichtungen, die eine unidirektionale Kommunikation mit einer Steuerungseinrichtung bereitstellen und nur über Ein/Aus-Signale angesteuert werden. Bei derartigen Gas-Heizvorrichtungen hat die Steuerungseinrichtung in der Regel keinerlei Kenntnis über einen Zustand der Gas-Heizvorrichtung. Diese kostengünstigen, unidirektional steuerbaren Gas-Heizvorrichtungen sehen üblicherweise sogenannte Anti-Wind-up-Maßnahmen vor, um ein unerwünschtes Übersteuern der Gas-Heizvorrichtungen zu vermeiden.

Bekannt sind Fernsteuerungen bzw. -bedienungen, mit denen z.B. mittels einer auf einem mobilen Endgerät ablaufenden Applikation ein Zustand einer Heizvorrichtung aus der Ferne gesteuert werden kann.

Aus der DE 196 13 024 B4 ist ein Regler für eine Heizungsanlage bekannt.

Aus der US 4,268,784 A ist ein Steuerverfahren und Vorrichtung bekannt.

### Offenbarung der Erfindung

Es ist eine Aufgabe der vorliegenden Erfindung, ein verbessertes Verfahren zum Betreiben einer Heizvorrichtung bereitzustellen.

Die Aufgabe wird gemäß einem ersten Aspekt gelöst mit einem Verfahren zum Betreiben einer Heizvorrichtung, wobei die Heizvorrichtung eine Betriebscharakteristik mit einer festen Sperrzeit aufweist, innerhalb derer die Heizvorrichtung nicht auf Steuerungssignale einer Steuerungseinrichtung reagiert, aufweisend die Schritte:
- Einlesen und Zuführen einer Umgebungstemperatur an die Steuerungseinrichtung, wobei im Falle, dass die Steuerungseinrichtung versucht, die Heizvorrichtung innerhalb der Sperrzeit anzusteuern, die pulsförmigen Steuerungssignale der Steuerungseinrichtung ignoriert werden, wobei ein Reglersignal der Steuerungseinrichtung derart korrigiert wird, dass nach Ablauf der Sperzeit die Pulslänge des pulsförmigen Steuerungssignals definiert verkürzt ist.

Gemäß einem zweiten Aspekt wird die Aufgabe gelöst mit einer Heizvorrichtung, wobei die Heizvorrichtung mittels einer Steuerungseinrichtung ansteuerbar ist, wobei die Heizvorrichtung eine Betriebscharakteristik mit einer festen Sperrzeit aufweist, innerhalb derer die Heizvorrichtung nicht auf Steuerungssignale der Steuerungseinrichtung reagiert, wobei im Falle, dass die Steuerungseinrichtung versucht, die Heizvorrichtung innerhalb der Sperrzeit anzusteuern, Steuerungssignale mit zwei Werten und mit definierten Pulslängen der Steuerungseinrichtung ignoriert werden, wobei ein Reglersignal der Steuerungseinrichtung definiert derart korrigiert wird, dass nach Ablauf der Sperrzeit die Pulslänge des pulsförmigen Steuerungssignals definiert verkürzt ist.

Auf diese Weise wird vorteilhaft ein "Überschießen" der Steuerungssignale vermieden, wodurch beim Wieder-Reagieren der Heizvorrichtung nach Ablauf der Sperrzeit die Heizvorrichtung nicht überheizt und ein angenehmes Raumklima bereitstellt. Eine vorteilhafte und effiziente Betriebscharakteristik der Heizvorrichtung ist auf diese Weise vorteilhaft unterstützt.

Bevorzugte Ausführungsformen des erfindungsgemäßen Verfahrens sind Gegenstand von abhängigen Ansprüchen.

Eine weitere vorteilhafte Weiterbildung des Verfahrens sieht vor, dass das Reglersignal eines PID-Reglers der Steuerungseinrichtung beim versuchten Aktivieren der Heizvorrichtung während der Sperrzeit definiert rückgesetzt wird. Auf diese Weise wird vorteilhaft erreicht, dass das Reglersignal nicht gänzlich auf Null reduziert wird, wodurch vorteilhaft nach einem Wieder-Reagieren der Heizvorrichtung eine Zeit zum Bereitstellen von Heizleistung der Heizvorrichtung reduziert werden kann.

Eine vorteilhafte Weiterbildung des Verfahrens sieht vor, dass das Steuerungssignal der Steuerungseinrichtung als ein mittels eines Tiefpassfilters gefiltertes Signal eines PID-Reglers (engl. proportional integral derivative) ausgebildet ist. Auf diese Weise kann auf einfache Weise eine Pulslänge des Steuerungssignals der Steuerungseinrichtung festgelegt werden.

Eine weitere vorteilhafte Weiterbildung des Verfahrens sieht vor, dass eine Gasheizvorrichtung angesteuert wird. Auf diese Weise wird ein nützlicher Anwendungsfall für das Verfahren bereitgestellt.

Die Erfindung wird im Folgenden mit weiteren Merkmalen und Vorteilen anhand von mehreren Figuren detailliert beschrieben.

Die Figuren sind dazu gedacht, die erfindungswesentlichen Prinzipien zu verdeutlichen. Offenbarte Verfahrensmerkmale ergeben sich analog aus entsprechenden offenbarten Vorrichtungsmerkmalen und umgekehrt.

In den Figuren zeigt:
- Fig. 1: ein prinzipielles Blockschaltbild einer Heizvorrichtung, für die das vorgeschlagene Verfahren verwendet wird;
- Fig. 2: einen zeitlichen Verlauf einer Raumtemperatur eines Raumes, der mit der Heizvorrichtung geheizt wird;
- Fig. 3: einen zeitlichen Verlauf eines internen Reglersignals der Steuerungseinrichtung;
- Fig. 4 und 5: zeitliche Verläufe eines Steuerungssignals der Steuerungseinrichtung; und
- Fig. 6: einen prinzipiellen Ablauf einer Ausführungsform des vorgeschlagenen Verfahrens.

### Beschreibung von Ausführungsbeispielen

Ein Kerngedanke der Erfindung besteht insbesondere darin, ein verbessertes Verfahren zum Betreiben einer Heizvorrichtung bereitzustellen.

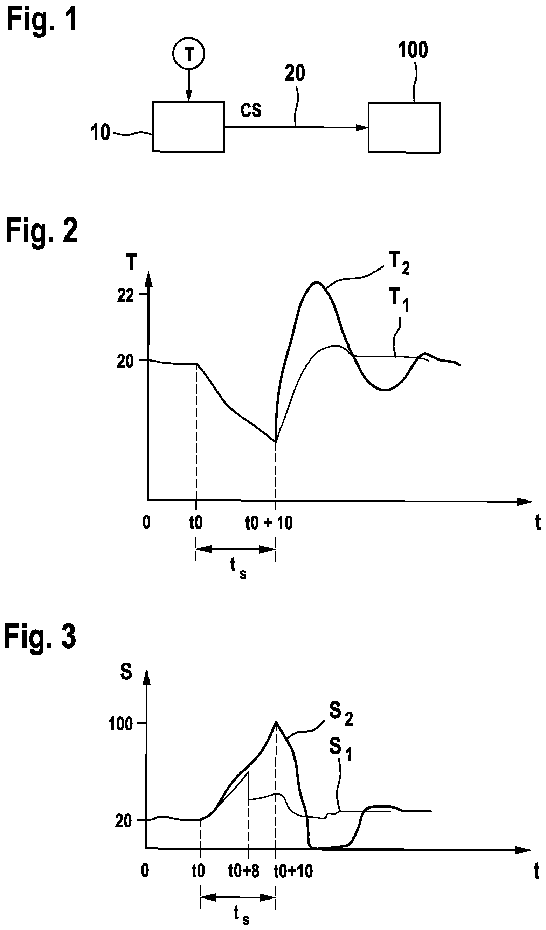

Fig. 1 zeigt vereinfacht ein Blockschaltbild einer an sich bekannten Heizvorrichtung 100, vorzugsweise in Form einer Gasheizvorrichtung. Man erkennt eine Steuerungseinrichtung 10, an die ein erfasster Wert einer Temperatur T eines von der Heizvorrichtung 100 geheizten Raumes zugeführt wird oder die selbständig die Temperatur T des mittels der Heizvorrichtung 100 geheizten Raumes erfassen kann.

Zwischen der Steuerungseinrichtung 10 (z.B. ein Raumthermostat) und der Heizvorrichtung 100 ist eine drahtgebundene Kommunikation vorgesehen, wobei dies die einzige Kommunikationsverbindung zwischen der Steuerungseinrichtung 10 und der Heizvorrichtung 100 darstellt. Eine Interaktion zwischen einem mobilen Endgerät (nicht dargestellt) eines Benutzers und der Steuerungseinrichtung 10 kann drahtlos, z.B. mittels WiFi durchgeführt werden. Die genannte Interaktion ist vor allem für eine Einstellung einer Komfortstufe, einer Einstellung einer Raumtemperatur, einer Einstellung eines Uhrzeitprogramms zum Betreiben der Heizvorrichtung 100, usw. vorgesehen.

Die Steuerungseinrichtung 10 ist mittels einer unidirektionalen Kommunikationsverbindung 20 mit der Heizvorrichtung 100 verbunden. Über die unidirektionale Kommunikationsverbindung 20 werden von der Steuerungseinrichtung 10 Steuerungssignale Cs an die Heizvorrichtung 100 übermittelt. Dabei sind die Steuerungssignale Cs pulsförmig mit definierten Pulslängen ausgebildet, wobei das Steuerungssignal Cs zwei Werte aufweist, die einer 0%-Heizanforderung oder einer 100%-Heizanforderung an die Heizvorrichtung 100 entsprechen.

Die Heizvorrichtung 100 weist eine Betriebscharakteristik mit einer festen, innerhalb der Heizvorrichtung 100 hinterlegten Sperrzeit ts auf (engl. anti fast cycle time), innerhalb derer die Heizvorrichtung 100 nicht auf Steuerungssignale der Steuerungseinrichtung 10 reagiert bzw. diese ignoriert. Innerhalb der Sperrzeit ts ist eine Aktivierung der Heizvorrichtung 100 seitens der Steuerungseinrichtung 10 nicht möglich.

Eine Dimensionierung der Sperrzeit ts erfolgt durch einen Hersteller der Heizvorrichtung 100 insbesondere im Hinblick auf einen sicheren Betrieb und eine lange Betriebsdauer der Heizvorrichtung 100. Vorzugweise beträgt die Sperrzeit ts ca. 5 bis ca. 15 Minuten, besonders bevorzugt ca. 10 Minuten. Dies bedeutet, dass ein innerhalb der Sperrzeit ts an die Heizvorrichtung 100 übermitteltes Steuerungssignal Cs erst nach Ablauf der genannten Sperrzeit ts berücksichtigt wird.

Alternativ kann vorgesehen sein, dass innerhalb der genannten Sperrzeit ts das Steuerungssignal Cs von der Steuerungseinrichtung 10 gar nicht an die Heizvorrichtung 100 übermittelt wird. Im Ergebnis bedeutet dies, dass die Heizvorrichtung 100 erst nach Ablauf der Sperrzeit ts wieder funktionsfähig bzw. wieder operabel ist, wodurch die Heizvorrichtung 100 vor Überlastung durch zu häufige Steuerungssignale Cs geschützt werden kann.

Die Sperrzeit ts repräsentiert also eine Mindestdauer, während der sich die Heizvorrichtung 100 zwischen zwei EIN-Zuständen in einem sicheren AUS-Zustand befindet.

Die nachfolgenden Diagramme der Figuren 2 bis 4 zeigen lediglich exemplarisch eine Sperrzeit ts der Heizvorrichtung 100 von ca. 10 Minuten. Es ist jedoch selbstverständlich, dass für die Heizvorrichtung 100 jede andere geeignete Sperrzeit ts vorgesehen sein kann.

Fig. 2 zeigt eine Auswirkung des vorgeschlagenen Verfahrens auf die Temperatur T eines mittels der Heizvorrichtung 100 geheizten Raums. Erkennbar ist, dass zum Zeitpunkt t = 0 die Steuerungseinrichtung 10 eine 100%-Heizanforderung mit der Wunschtemperatur T = 20°C an die Heizvorrichtung 100 übermittelt. Um diese gewünschte Temperatur T = 20°C zu erreichen, übermittelt die Steuerungseinrichtung 10 zum Zeitpunkt t = to eine 0%-Anforderung an die Heizvorrichtung 100, wodurch zu diesem Zeitpunkt die Heizvorrichtung 100 abgeschaltet wird. Ab dem Zeitpunkt t = to kann somit aufgrund von internen technischen Mitteln die Heizvorrichtung 100 bis zum Zeitpunkt t₀+10 physikalisch nicht mehr eingeschaltet werden, was einer Sperrzeit ts der Heizvorrichtung 100 von 10 Minuten entspricht.

Fig. 2 zeigt einen zeitlichen Temperaturverlauf T₁(t), der mittels des vorgeschlagenen Verfahrens erreicht werden kann. Man erkennt, dass die Temperatur T₁ nach Erreichen des vorgesehenen Wertes von 20°C im Wesentlichen konstant bleibt, ohne dass ein nennenswertes Überschwingen der Temperatur stattfindet, was als eine angenehme Raumtemperatur empfunden wird.

Demgegenüber ist in einem in Fig. 2 dargestellten zeitlichen Verlauf der Temperatur T₂(t) erkennbar, dass ohne das vorgeschlagene Verfahren ein Überschwingen der Temperatur stattfindet. Man erkennt, dass in diesem Fall ein erhöhter Anstieg der Raumtemperatur T₂ über den gewünschten Wert von 20°C stattfindet. Bis zum Zeitpunkt t₀+10 ist das vorgeschlagene Verfahren noch ohne Auswirkung auf die Temperatur T.

Fig. 3 zeigt zwei zeitliche Verläufe eines internen Signals bzw. Reglersignals S eines PID-Reglers der Steuerungseinrichtung 10, wobei das Reglersignal S₁ einen zeitlichen Verlauf mit dem vorgeschlagenen Verfahren repräsentiert und das Reglersignal S₂ einen zeitlichen Verlauf ohne das vorgeschlagene Verfahren darstellt.

Beim vorgeschlagenen Verfahren erfolgt zum Zeitpunkt to+8 ein definiertes Rücksetzen des Reglersignals S₁ eines PID-Reglers der Steuerungseinrichtung 10, weil das Steuerungssignal Cs innerhalb der Sperrzeit ts von der Heizvorrichtung 100 ignoriert wird. Das definierte Rücksetzen des Reglersignals S₁ wird durch ein Konstanthalten eines Integrators des PID-Reglers erreicht. Im Ergebnis werden dadurch Steuerungssignale Cs ignoriert, bzw. gar nicht an die Heizvorrichtung 100 übermittelt, wodurch das Reglersignal S₁ des PID-Reglers, das die Steuerungseinrichtung 10 ansteuert, gemäß dem verwendeten Algorithmus des Verfahrens definiert rückgesetzt wird.

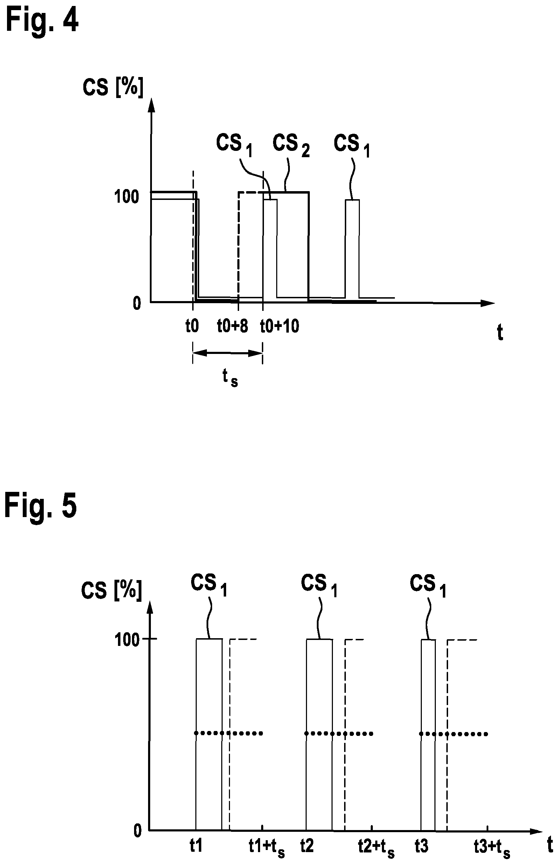

Zum Zeitpunkt t₀+10, wenn die Heizvorrichtung 100 den gesperrten Zustand wieder beendet, weist das Reglersignal S₁ auf diese Weise eine verringerte Amplitude auf. Im Ergebnis weist dadurch das Steuerungssignal C_{S1} der Heizvorrichtung 100 eine verkürzte Pulsdauer auf, wie es in Fig. 4 angedeutet ist.

Ein dadurch erreichter glatterer Verlauf des Raumtemperaturanstiegs wird durch einen weniger ausgeprägten Abfall des Reglersignals S₁ nach dem Zeitpunkt t₀+10 bewirkt, weil die Heizvorrichtung 100 für eine entsprechend kürzere Zeit wieder eingeschaltet werden muss. Auf diese Weise kann ein als unangenehm empfundenes Oszillieren der Raumtemperatur T verhindert werden.

Ein zweiter zeitlicher Verlauf von Fig. 3 zeigt das Reglersignal S₂ der Steuerungseinrichtung 10 ohne das vorgeschlagene Verfahren. In diesem Fall erfolgt aufgrund des Abfalls der Temperatur T ebenfalls ein Ansteigen des Reglersignals S₂ ab dem Moment des Abschaltens der Heizvorrichtung 100 zum Zeitpunkt to.

Allerdings erfolgt in diesem Fall ein Anstieg des Reglersignals S₂ bis zum Wieder-Reagieren den Heizvorrichtung 100 innerhalb der Sperrzeit ts, d.h. bis zum Zeitpunkt to +10, zu dem die Heizvorrichtung 100 wieder auf Steuerungssignale CS reagiert. Danach sinkt das Reglersignal S₂ abrupt auf Null. Im Ergebnis wird mit einem derart überhöhten Reglersignal S₂ ein langes Steuerungssignal CS₂ für die Steuerungseinrichtung 10 generiert, wodurch eine lange Heizwirkung der Heizvorrichtung 100 bewirkt wird, die den überhöhten Temperaturverlauf T₂(t) von Fig. 2 generiert.

Fig. 4 zeigt zwei zeitliche Verläufe von Steuerungssignalen CS der Steuerungseinrichtung 10 für die Heizvorrichtung 100, wobei ein Steuerungssignal CS₁ mit dem Reglersignal S₁ generiert wird, und wobei ein Steuerungssignal CS₂ mit einem Reglersignal S₂ generiert wird. Man erkennt die oben erwähnten zeitlichen Unterschiede der Pulsdauern der Steuerungssignale CS₁, CS₂, wodurch die unterschiedlichen Heizwirkungen der Heizvorrichtung 100 bewirkt werden und die daraus unterschiedlichen Temperaturverläufe von Fig. 2.

Fig. 4 zeigt, dass mittels des vorgeschlagenen Verfahrens zum Zeitpunkt t₀+10, in dem die Heizvorrichtung 100 wieder auf Steuerungssignale CS reagiert, wesentlich kürzere Steuerungssignale CS₁ von der Steuerungseinrichtung 10 als ohne das vorgeschlagene Verfahren an die Heizvorrichtung 100 übermittelt werden.

Qualitativ sind die mittels des vorgeschlagenen Verfahrens generierten Steuerungssignal CS₁ in Fig. 5 erkennbar, wobei angedeutet ist, dass innerhalb der Sperrzeit ts gestrichelt dargestellte Steuerungssignale der Steuerungseinrichtung 10 von der Heizvorrichtung 100 ignoriert werden.

Erkennbar ist, dass zum Zeitpunkt t₁ ein erstes Steuerungssignal CS₁ an die Heizvorrichtung 100 übermittelt wird. Nachdem die Heizvorrichtung 100 abgeschaltet ist, übermittelt die Steuerungseinrichtung 10 ein weiteres Steuerungssignal CS₁ vor Ablauf der Sperrzeit ts. Dieses Steuerungssignal CS₁ wird von der Heizvorrichtung 100 allerdings ignoriert und das Reglersignal S₁ des PID-Reglers der Steuerungseinrichtung 10 wird entsprechend rückgesetzt. Dieser Prozess wird zu den Zeitpunkten t₂ und t₃ wiederholt.

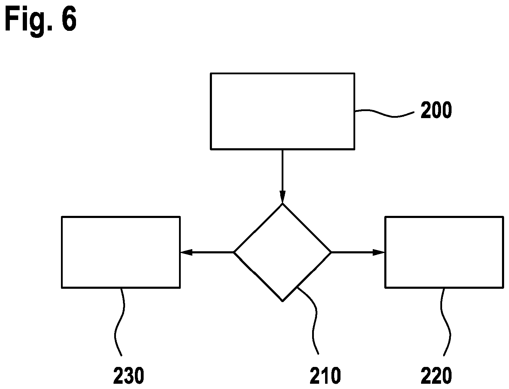

Fig. 6 zeigt einen prinzipiellen Ablauf einer Ausführungsform des vorgeschlagenen Verfahrens zum Betreiben einer Heizvorrichtung 100, wobei die Heizvorrichtung eine Betriebscharakteristik mit einer festen Sperrzeit ts aufweist, innerhalb derer die Heizvorrichtung 100 nicht auf Steuerungssignale Cs einer Steuerungseinrichtung 10 reagiert.

In einem Schritt 200 wird die Temperatur T eingelesen.

In einem Schritt 210 wird überprüft, ob die Steuerungseinrichtung 10 während der Sperrzeit ts versucht, die Heizvorrichtung 100 zu aktivieren.

In einem Schritt 220 werden im Falle, dass dies zutrifft, Steuerungssignale Cs der Steuerungseinrichtung 10 ignoriert, wobei ein Reglersignal S1 der Steuerungseinrichtung 10 definiert korrigiert wird.

In einem Schritt 230 werden im Falle, dass dies nicht zutrifft, Steuerungssignale CS der Steuerungseinrichtung 10 akzeptiert.

Vorteilhaft lässt sich das vorgeschlagene Verfahren als eine Software implementieren, die auf der elektronischen Steuerungseinrichtung 10 abläuft und auf diese Weise auf einfache Weise mit nur geringem Zusatzaufwand realisiert werden kann.

Zusammenfassend wird mit der vorliegenden Erfindung ein Verfahren zum Betreiben einer Heizvorrichtung vorgeschlagen, mit dem ein wirtschaftlicher Betrieb der Heizvorrichtung möglich ist. Erreicht wird dies durch ein zeitlich definiertes Ignorieren und Akzeptieren von Steuerungssignalen, die im Ergebnis ein Übersteuern der Heizvorrichtung vermeiden.

## Patentansprüche

1. Verfahren zum Betreiben einer Heizvorrichtung (100), wobei die Heizvorrichtung eine Betriebscharakteristik mit einer festen Sperrzeit (ts) aufweist, innerhalb derer die Heizvorrichtung (100) nicht auf pulsförmige Steuerungssignale (CS) mit zwei Werten und mit definierten Pulslängen einer Steuerungseinrichtung (10) reagiert, **gekennzeichnet durch** die Schritte:
- Einlesen und Zuführen einer Umgebungstemperatur (T) an die Steuerungseinrichtung (10), wobei im Falle, dass die Steuerungseinrichtung (10) versucht, die Heizvorrichtung (100) innerhalb der Sperrzeit (ts) anzusteuern, die pulsförmigen Steuerungssignale (CS) der Steuerungseinrichtung (10) ignoriert werden, wobei ein Reglersignal (S₁) der Steuerungseinrichtung (10) definiert derart korrigiert wird, dass nach Ablauf der Sperrzeit (ts) die Pulslänge des pulsförmigen Steuerungssignals (CS) definiert verkürzt ist.

2. Verfahren nach Anspruch 1, wobei das Reglersignal (S₁) eines PID-Reglers der Steuerungseinrichtung (10) beim versuchten Aktivieren der Heizvorrichtung (100) während der Sperrzeit (ts) definiert rückgesetzt wird.

3. Verfahren nach Anspruch 1 oder 2, wobei das Steuerungssignal (CS) der Steuerungseinrichtung (10) als ein mittels eines Tiefpassfilters gefiltertes Signal des PID-Reglers ausgebildet ist.

4. Verfahren nach einem der vorhergehenden Ansprüche, wobei eine Gasheizvorrichtung angesteuert wird.

5. Heizvorrichtung (100), wobei die Heizvorrichtung mittels einer Steuerungseinrichtung (10) ansteuerbar ist, wobei die Heizvorrichtung eine Betriebscharakteristik mit einer festen Sperrzeit (ts) aufweist, innerhalb derer die Heizvorrichtung (100) nicht auf Steuerungssignale der Steuerungseinrichtung (10) reagiert, **dadurch gekennzeichnet, dass** im Falle, dass die Steuerungseinrichtung (10) versucht, die Heizvorrichtung (100) innerhalb der Sperrzeit (ts) anzusteuern, Steuersignale (CS) mit zwei Werten und mit definierten Pulslängen der Steuerungseinrichtung (10) ignoriert werden, wobei ein Reglersignal (S1) der Steuerungseinrichtung (10) definiert derart korrigiert wird, dass nach Ablauf der Sperrzeit (ts) die Pulslänge des pulsförmigen Steuerungssignals (CS) definiert verkürzt ist.

## Claims

1. Method for operating a heating apparatus (100), wherein the heating apparatus has an operating characteristic with a fixed off time (tₛ) within which the heating apparatus (100) does not react to pulsed control signals (CS) with two values and with defined pulse lengths of a control device (10), **characterized by** the steps of:
- reading in and feeding an ambient temperature (T) to the control device (10), wherein, if the control device (10) attempts to actuate the heating apparatus (100) within the off time (tₛ), the pulsed control signals (CS) of the control device (10) are ignored, wherein a controller signal (S₁) of the control device (10) is corrected in a defined manner in such a way that the pulse length of the pulsed control signal (CS) is shortened in a defined manner after the off time (ts) has elapsed.

2. Method according to Claim 1, wherein the controller signal (S₁) of a PID controller of the control device (10) is reset in a defined manner in the event of attempted activation of the heating apparatus (100) during the off time (tₛ).

3. Method according to Claim 1 or 2, wherein the control signal (CS) of the control device (10) is in the form of a signal of the PID controller filtered by means of a low-pass filter.

4. Method according to one of the preceding claims, wherein a gas heating apparatus is actuated.

5. Heating apparatus (100), wherein the heating apparatus can be actuated by means of a control device (10), wherein the heating apparatus has an operating characteristic with a fixed off time (tₛ) within which the heating apparatus (100) does not react to control signals of the control device (10), **characterized in that**, if the control device (10) attempts to actuate the heating apparatus (100) within the off time (tₛ), control signals (CS) with two values and with defined pulse lengths of the control device (10) are ignored, wherein a controller signal (S1) of the control device (10) is corrected in a defined manner in such a way that the pulse length of the pulsed control signal (CS) is shortened in a defined manner after the off time (ts) has elapsed.

## Revendications

1. Procédé de fonctionnement d'un dispositif de chauffage (100), le dispositif de chauffage comportant une caractéristique de fonctionnement avec un temps de blocage fixe (tₛ), pendant lequel le dispositif de chauffage (100) ne réagit pas à des signaux de commande pulsés (CS) ayant deux valeurs et des longueurs d'impulsion définies d'un moyen de commande (10), **caractérisé par** les étapes suivantes :
- relever une température ambiante (T) et la fournir au moyen de commande (10), les signaux de commande pulsés (CS) du moyen de commande (10) étant ignorés si le moyen de commande (10) tente de commander le dispositif de chauffage (100) pendant le temps de blocage (tₛ), un signal de régulation (S₁) du moyen de commande (10) étant corrigé de manière définie de façon à raccourcir de manière définie la longueur d'impulsion du signal de commande pulsé (CS) après expiration du temps de blocage (tₛ).

2. Procédé selon la revendication 1, le signal de régulation (S₁) d'un régulateur PID du moyen de commande (10) étant réinitialisé de manière définie lors d'une tentative d'activation du dispositif de chauffage (100) pendant le temps de blocage (tₛ).

3. Procédé selon la revendication 1 ou 2, le signal de commande (CS) du moyen de commande (10) étant conçu sous la forme d'un signal du régulateur PID qui est filtré au moyen d'un filtre passe-bas.

4. Procédé selon l'une des revendications précédentes, un dispositif de chauffage au gaz étant commandé.

5. Dispositif de chauffage (100), le dispositif de chauffage pouvant être commandé à l'aide d'un moyen de commande (10), le dispositif de chauffage ayant une caractéristique de fonctionnement avec un temps de blocage fixe (tₛ) pendant lequel le dispositif de chauffage (100) ne réagit pas à des signaux de commande du moyen de commande (10), **caractérisé en ce que** des signaux de commande (CS) ayant deux valeurs et des longueurs d'impulsion définies du moyen de commande (10) étant ignorés si le moyen de commande (10) tente de commander le dispositif de chauffage (100) pendant le temps de blocage (tₛ), un signal de régulation (S1) du moyen de commande (10) étant corrigé de manière définie de façon à raccourcir de manière définie la longueur d'impulsion du signal de commande pulsé (CS) après expiration du temps de blocage (tₛ).
